Europäisches Patentamt

European Patent Office

Office européen des brevets

(19)

(11) Veröffentlichungsnummer: **0 119 435 B1**

(12) **EUROPÄISCHE PATENTSCHRIFT**

(45) Veröffentlichungstag der Patentschrift:
07.01.88

(21) Anmeldenummer: 84101261.0

(22) Anmeldetag: 08.02.84

(51) Int. Cl.⁴: **C 25 D 17/06,** C 25 D 17/12, C 25 C 7/02, C 25 B 15/04, F 15 B 15/10, F 16 B 2/12

(54) Vorrichtung zur Aufnahme und Nachstellung von Anoden in galvanischen Anlagen zur Bandveredelung.

(30) Priorität: 12.03.83 DE 3308943

(43) Veröffentlichungstag der Anmeldung:
26.09.84 Patentblatt 84/39

(45) Bekanntmachung des Hinweises auf die Patenterteilung:
07.01.88 Patentblatt 88/1

(84) Benannte Vertragsstaaten:
AT BE DE FR GB IT LU NL SE

(56) Entgegenhaltungen:
EP - A - 0 039 928
EP - A - 0 091 783
DE - A - 2 731 699
GB - A - 2 016 048
GB - A - 2 043 176
US - A - 4 151 063

(73) Patentinhaber: Hoesch Aktiengesellschaft,
Eberhardstrasse 12, D-4600 Dortmund 1 (DE)

(72) Erfinder: Bechem, Werner, Dipl.-Ing., Im Henkenhof 17,
D-5912 Hilchenbach (DE)
Erfinder: Peters, Hubertus, Dipl.-Ing., Grabbeplatz 17,
D-4600 Dortmund (DE)
Erfinder: Wolfhard, Dietrich, Dr.-Ing., Schulzstrasse 7,
D-4600 Dortmund (DE)
Erfinder: Hula, Emil, Aichholzgasse 51-53,
A-1121 Wien 12 (AT)

ACTORUM AG

**Beschreibung**

Die Erfindung betrifft eine Vorrichtung zur Aufnahme und Nachstellung einer oder mehrerer Anoden in galvanischen Anlagen zur Bandveredelung, bestehend aus einer die Anoden tragenden Anodenschiene, wobei die Anoden mittels einer Klemmvorrichtung gegen die Anodenschiene pressbar und gegenüber der Anodenschiene mittels zum linearen Transport geeigneter, führender Maschinenelemente verschiebbar sind.

Bekannt ist die Stromübertragung auf die zur elektrolytischen Veredelung notwendigen Anoden durch Anodenschienen, auf denen die Anoden durch ihr Eigengewicht aufliegen. In manchen Fällen werden die Anoden durch Schraubverbindungen kontaktiert. Bei allen bekannten Konstruktionen sind die maximal übertragbaren Strommengen begrenzt bzw. die Stromübergangswiderstände unnötig hoch. Es kommt bei nicht exakter Masshaltigkeit des an der Anodenschiene anliegenden Anodenbereiches zu Anbrennungen bzw. anderen Kontaktierungsproblemen, so dass die Übergangswiderstände höher werden und ein notwendiges Verschieben erschwert bzw. durch die Anbrennung teilweise unmöglich wird.

Ferner bekannt ist die Ausführung der Anodenschiene in der Art, dass der Stromübergang über obenliegende, im Winkel zueinander angeordneten Flächen erfolgen soll. Durch diese Vorgehensweise erhält man einen von Anode zu Anode sowohl nach Zahl der Kontaktflächen als auch nach dem Übergangswiderstand unterschiedlichen Stromübergang.

Aus der EP-AI-0 039 928 ist ein Galvanisiergestell mit gabelförmigem oberem Ende und einer Zunge zwischen den Gabelschenkeln, die entweder auf einer stromführenden Tragschiene aufliegt oder gegen diese gepresst werden kann.

Diese bekannte Vorrichtung ist aber nicht für die Klemmung von Anoden in Bandveredelungsanlagen geeignet, da in derartigen Anlagen die Anodenschiene eine Länge bis zu etwa 2 m hat und somit eine Vielzahl dieser bekannten Vorrichtung nötig wäre, die ausserdem auch noch gleichzeitig betätigt werden müssten, was unter den Elektrolyt- und Temperatureinwirkungen nicht betriebssicher durchgeführt werden kann.

Ebenso ist die aus der DE-AI-2 731 699 bekannte Klammer zum halten von zu anodisierenden Teilen an einer Schiene in einer Anodisier-Anlage nicht geeignet, Anoden in einer Bandveredelungsanlage aufzunehmen und ihre Nachstellung zu ermöglichen aus den gleichen Gründen, die oben zu der EP-AI-0 039 928 angeführt sind.

Ferner zeigt die GB-A-2 043 176 eine Spannvorrichtung mit aufblasbarem Schlauch zwischen einer Gegendruckplatte und zahlreichen, in einer gemeinsamen Trägerplatte geführten Stösseln, durch die der Schlauchdruck in eine gerichtete Kraft umgesetzt wird. Die Stössel können durch Federkraft bei drucklosem Schlauch zurückgezogen werden.

Diese bekannte Spannvorrichtung ist aber weder zur Aufnahme und Nachstellung von Anoden in Bandbehandlungsanlagen geeignet, noch gibt sie irgendeinen Hinweis darauf.

Ausserdem bekannt ist eine Anodenverschiebeeinrichtung aus der DE-C-2 323 788, bei der die Anodenverschiebung dadurch bewerkstelligt wird, dass am Anodenkopf der zuletzt eingehängten äusseren Anode einer Anodenreihe eine Schubkraft angreift, über die die gesamte Anodenreihe verschoben wird. Aufgrund von Erfahrungen mit derartigen Verschiebeeinrichtungen ist abzuleiten, dass ein störungsfreier Betrieb mit einer derartigen Einrichtung nicht durchgeführt werden kann, da die zuletzt eingehängte Anode, an der die Kraft angreift, mitunter von der Anodenschiene abgehoben wird und herunterfällt. Dieses Problem lässt sich auch bei optimaler Justierung der Schubstange nicht lösen.

Von daher ist es Aufgabe der Erfindung, eine Vorrichtung zur Aufnahme und Nachstellung einer oder mehrerer Anoden in galvanischen Anlagen zur Bandveredelung zu schaffen, die die vorgenannten Nachteile vermeidet und insbesondere eine sichere und einfache Klemmung und dadurch einen optimalen Kontakt aller Anoden auf der Anodenschiene gewährleistet, wobei ein Nachstellen auf einfache Weise ermöglicht wird, ohne dass Anoden herunterfallen.

Nach der Erfindung wird die Aufgabe in der Weise gelöst, dass die Klemmvorrichtung aus pneumatisch oder hydraulisch befüllbaren, aus elastischen Mitteln bestehenden Hohlkörpern wie Schläuchen besteht. Zweckmässige und vorteilhafte Aus- und Weiterbildungen sind in den Ansprüchen 2 bis 7 angegeben.

Die Vorteile der Vorrichtung nach der Erfindung sind insbesondere darin zu sehen, dass sie immer für einen optimalen elektrischen Kontakt über die gesamte Länge zwischen Anodenschiene und Anoden sorgt und Anbrennungen verhindert und durch kurzes zeitweiliges Lösen der Klemmvorrichtung auf einfache Weise ein Verschieben und damit Nachstellen der Anoden erlaubt, ohne dass einzelne Anoden abgehoben werden oder herunterfallen.

In der Zeichnung ist die Vorrichtung zur Aufnahme und Nachstellung einer oder mehrerer Anoden nach der Erfindung anhand von Ausführungsbeispielen näher erläutert.

Es zeigen:
Bild 1 eine Ausführungsform im Schnitt,
Bild 2 eine andere Ausführungsform im Schnitt,
Bild 3 eine weitere Ausführungsform im Schnitt.

Wie aus den Bildern 1 bis 3 hervorgeht, besteht die erfindungsgemässe Vorrichtung in diesem Fall aus einer rechteckigen, nach einer Seite offenen Anode 3, die eine Anodenschiene 1 zusammen mit einer leicht lösbaren Klemmvorrichtung übergreift, wobei die Klemmvorrichtung zwischen einem Schenkel der Anode 3 und der Anodenschiene 1 angeordnet ist und die Anode 3 von der Anodenschiene 1 getragen und mit ihrem anderen Schenkel gegen die Anodenschiene 1 gepresst wird und somit für einen optimalen elektrischen Kontakt zwischen Anode 3 und Anodenschiene 1 sorgt.

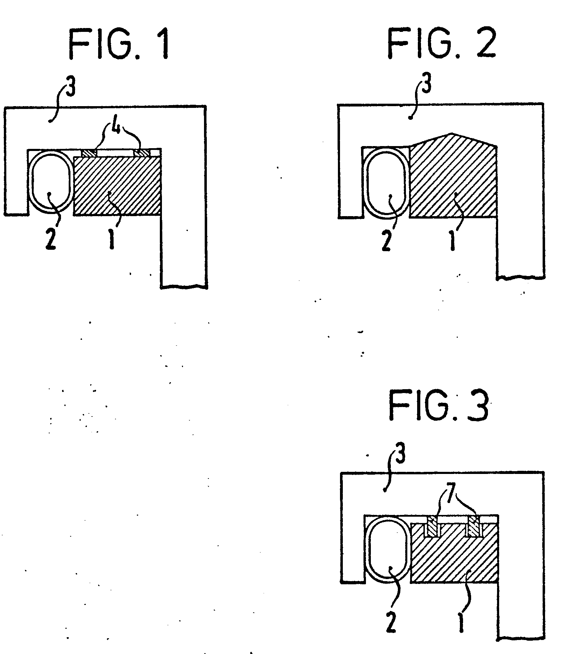

Die Klemmvorrichtung besteht dabei aus mit einem gasförmigen oder flüssigen Medium gefüllten Schläuchen 2, die ganz oder teilweise metallummantelt bzw. verstärkt sind, wobei die Anodenschiene 1 auf ihren oberen Flächen Gleitschienen 4, auf denen die Anode 3 beim Verschieben gleitet, aufweist (Fig. 1).

Selbstverständlich ist es auch möglich, dass die Klemmvorrichtung zwischen der Anode und einem äusseren Widerlager angeordnet ist.

In Bild 2 ist dargestellt, wie die Anodenschiene 1 die Anode 3 über geneigte Flächen trägt.

Schliesslich zeigt noch Bild 3, dass zwischen Anode 3 und Anodenschiene 1 Transportketten 7 in der oberen Fläche der Anodenschiene 1 zum Verschieben der Anode 3 angeordnet sind.

Wie in den Bildern 1 bis 3 dargestellt, pressen die Klemmvorrichtungen in Form von mit gasförmigen oder flüssigen Medien gefüllten Schläuchen 2 nun die Anode 2 gegen die Anodenschiene 1, so dass ein optimaler elektronischer Kontakt zwischen ihnen vorhanden ist. Zum Verschieben der Anode 3 auf der Anodenschiene 1 wird die Anodenschiene 1 vom Stromkreis getrennt und die Klemmvorrichtung in Form von Schläuchen 2 kurzzeitig gelöst, so dass nunmehr die Anode 3 auf der sie tragenden Anodenschiene 1 auf den Gleitschienen 4 oder geneigten Flächen oder mittels der Transportketten 7 verschoben und nachgestellt werden kann. Nach dem Verschieben wird die Anode 2 wieder mittels der Schläuche 2 gegen die Anodenschiene 1 gepresst und der Stromkreis geschlossen.

## Patentansprüche

1. Vorrichtung zur Aufnahme und Nachstellung einer oder mehrerer Anoden (3) in galvanischen Anlagen zur Bandveredelung, bestehend aus einer die Anoden (3) tragenden Anodenschiene (1), wobei die Anoden (3) mittels einer Klemmvorrichtung gegen die Anodenschiene (1) pressbar und gegenüber der Anodenschiene (1) mittels zum linearen Transport geeigneter, führender Maschinenelemente verschiebbar sind, dadurch gekennzeichnet, dass die Klemmvorrichtung aus pneumatisch oder hydraulisch befüllbaren, aus elastischen Mitteln bestehenden Hohlkörpern wie Schläuchen (2) besteht.

2. Vorrichtung nach Anspruch 1, dadurch gekennzeichnet, dass die Anoden (3) die Anodenschiene (1) zusammen mit der Klemmvorrichtung übergreifen, wobei die Klemmvorrichtung zwischen einem Schenkel der Anoden (3) und der Anodenschiene (1) angeordnet ist.

3. Vorrichtung nach Anspruch 1, dadurch gekennzeichnet, dass die Anoden (3) die Anodenschiene (1) allein übergreifen, wobei die Klemmvorrichtung zwischen den Anoden (3) und einem äusseren Widerlager angeordnet ist.

4. Vorrichtung nach den Ansprüchen 1 bis 3, dadurch gekennzeichnet, dass die Anodenschiene (1) mit vom Stromkreis getrennten Gleitschienen (4) auf der oberen Fläche versehen ist.

5. Vorrichtung nach Anspruch 4, dadurch gekennzeichnet, dass die Gleitschienen (4) zur Verschiebung der Anode (3) anhebbar sind.

6. Vorrichtung nach den Ansprüchen 4 und 5, dadurch gekennzeichnet, dass die Gleitschienen (4) als Hubbalkentransporteinrichtung ausgebildet sind.

7. Vorrichtung nach einem oder mehreren der Ansprüche 1 bis 6, dadurch gekennzeichnet, dass die Anoden (3) mittels antreibbarer Transportketten (7) allein oder in Verbindung mit dem Hubbalkentransport verschiebbar sind.

## Claims

1. Apparatus for holding and adjusting one or more anodes (3) in galvanic devices for finishing strips, comprising an anode rail (1) supporting the anodes (3), where the anodes (3) can be pressed against the rail (1) by means of a clamping device and are movable with respect to the anode rail (1) by means of guiding machine elements suitable for linear transport, characterised in that the clamping device comprises pneumatically or hydraulically fillable hollow bodies comprising elastic means, such as sleeves (2).

2. Apparatus according to claim 1, characterised in that the anodes (3) engage the anode rail (1) together with the clamping device, the clamping device being arranged between a shank of the anode (3) and the anode rail (1).

3. Apparatus according to claim 1, characterised in that the anodes (3) engage the anode rail (1) alone, the clamping device being arranged between the anodes (3) and an external countersupport.

4. Apparatus according to claims 1 to 3, characterised in that the anode rail (1) is provided with slide rails (4) on its upper surface separated from the current circuit.

5. Apparatus according to claim 4, characterised in that the slide rails (4) are raisable for moving the anodes (3).

6. Apparatus according to claims 4 and 5, characterised in that the slide rails (4) are constructed as a lifting beam transport device.

7. Apparatus according to one or more of claims 1 to 6, characterised in that the anodes (3) are movable by means of drivable transport chains (7) alone or in connection with the lifting beam transport device.

## Revendications

1. Dispositif pour la réception et le réglage d'une ou plusieurs anodes (3) dans des installations galvaniques pour l'affinage de bandes, ce dispositif étant constitué d'un rail anodique (1) supportant les anodes (3), tandis que les anodes (3) peuvent être pressées contre le rail anodique (1) au moyen d'un dispositif de serrage et peuvent être déplacées vis-à-vis du rail anodique (1) au moyen d'éléments mécaniques de guidage appropriés pour le transport linéaire, caractérisé en ce que le dispositif de serrage est formé de corps creux tels que des tuyaux (2) constitués d'éléments élastiques et pouvant être mis sous pression pneumatiquement ou hydrauliquement.

2. Dispositif suivant la revendication 1, caractérisé en ce que les anodes (3) chevauchent le rail anodique (1) et le dispositif de serrage, ce dernier étant disposé entre une branche des anodes (3) et le rail anodique (1).

3. Dispositif suivant la revendication 1, caractérisé en ce que les anodes (3) chevauchent uniquement le rail anodique (1), le dispositif de serrage étant disposé entre les anodes (3) et une butée extérieure.

4. Dispositif suivant les revendications 1 à 3, caractérisé en ce que le rail anodique (1) comporte, sur sa surface supérieure, des glissières (4) séparées du circuit de courant.

5. Dispositif suivant la revendication 4, caractérisé en ce que les glissières (4) peuvent être soulevées en vue de déplacer les anodes.

6. Dispositif suivant les revendications 4 et 5, caractérisé en ce que les glissières (4) sont réalisées sous forme d'un dispositif transporteur à longerons mobiles.

7. Dispositif suivant une ou plusieurs des revendications 1 à 6, caractérisé en ce que les anodes (3) peuvent être déplacées au moyen de chaînes transporteuses (7) pouvant être entraînées, seules ou en combinaison avec le dispositif transporteur à longerons mobiles.

# FIG. 1

# FIG. 2

# FIG. 3